Europäisches Patentamt

European Patent Office

Office européen des brevets

(19)

(11) Publication number: **0 211 687**

A1

## (12) EUROPEAN PATENT APPLICATION

(21) Application number: **86306404.4**

(22) Date of filing: **19.08.86**

(51) Int. Cl.⁴: **F 16 H 1/28**

(30) Priority: **23.08.85 AU 2113/85**

(43) Date of publication of application:
**25.02.87 Bulletin 87/9**

(84) Designated Contracting States:
**AT BE CH DE FR GB IT LI LU NL SE**

(71) Applicant: **RINEFAS LIMITED**
**Unit 3, 45-47 Vore Street**
**Silverwater New South Wales 2141(AU)**

(72) Inventor: **Haage, Dieter**
**48 Kilmarnock Road**
**Engadine New South Wales 2233(AU)**

(74) Representative: **Baillie, Iain Cameron**
**c/o Ladas & Parry Isartorplatz 5**
**D-8000 München 2(DE)**

(54) **A gear mechanism.**

㊼ A gear train 10 having an input shaft 11 upon which there is eccentrically mounted a planetary gear 16, the planetary gear 16 being meshingly engaged with a ring gear 14 so that the planetary gear 16 is caused to rotate about the longitudinal axis of the shaft as well as the eccentric axis, and gear means 21,20 coupling the sun gear 16 to an output shaft 19 to thereby transmit power to the output shaft 19.

FIG. 2

EP 0 211 687 A1

"A GEAR MECHANISM"

The present invention relates to gear assemblies and more particularly but not exclusively to gear assemblies having a large gear reduction.

Conventionally gears having a high reduction ratio have suffered from the disadvantage that the smaller of the gears is subjected to considerable force and therefore is prone to failure. Additionally, gearing mechanisms having a high reduction ratio are generally large and expensive.

It is the object of the present invention to overcome or substantially ameliorate the above disadvantages.

There is disclosed herein a gear train comprising a shaft having an axis of rotation, an internal ring gear coaxial with respect to said shaft, a sun gear means coaxial with respect to said shaft, a planetary gear rotatably supported on said shaft so as to be rotatable with respect thereto about an axis eccentric with respect to the rotational axis of said shaft, said planetary gear having external gear teeth meshingly engaged with said ring gear, and internal gear teeth means meshingly engaged with said sun gear means, whereby rotary power is transferred between said shaft and said sun gear means upon rotation of said planetary gear about its eccentric axis and the axis of said shaft.

A preferred form of the present invention will now be described by way of example with reference to the accompanying drawings, wherein:

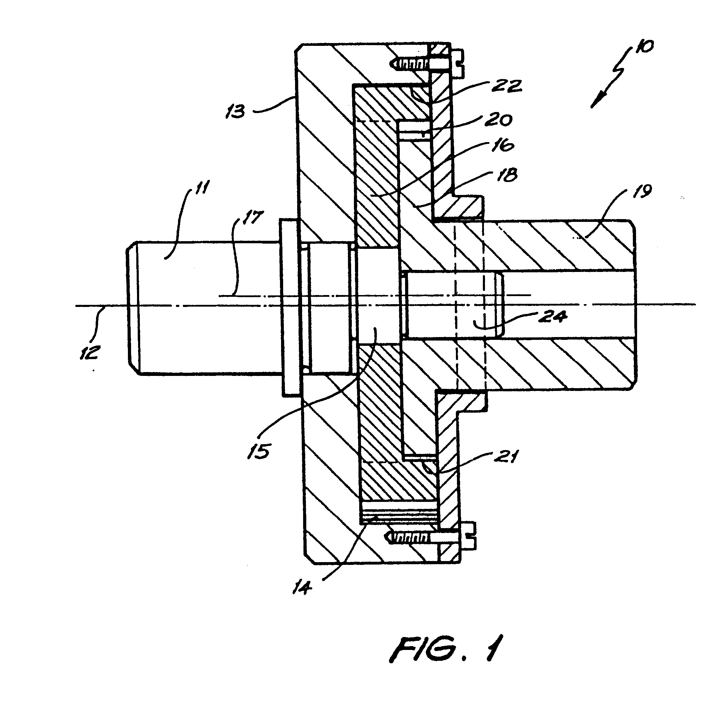

Fig. 1 is a schematic sectioned side elevation of a planetary gear train;

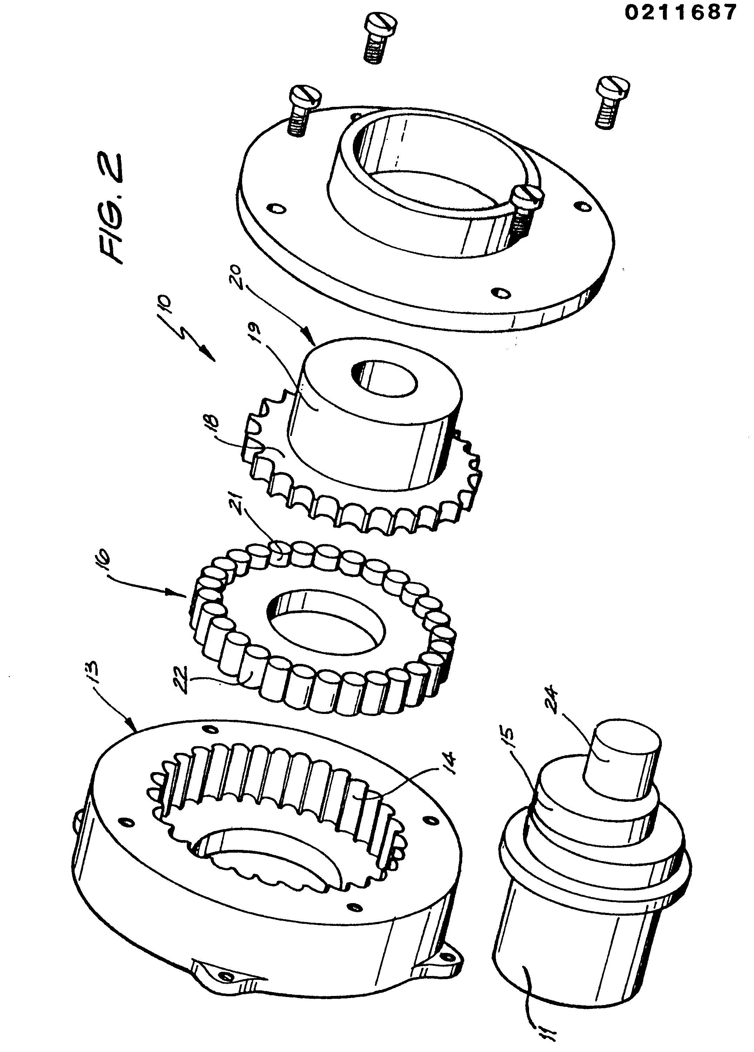

Fig. 2 is a schematic parts exploded perspective view of the gear train of Fig. 1;

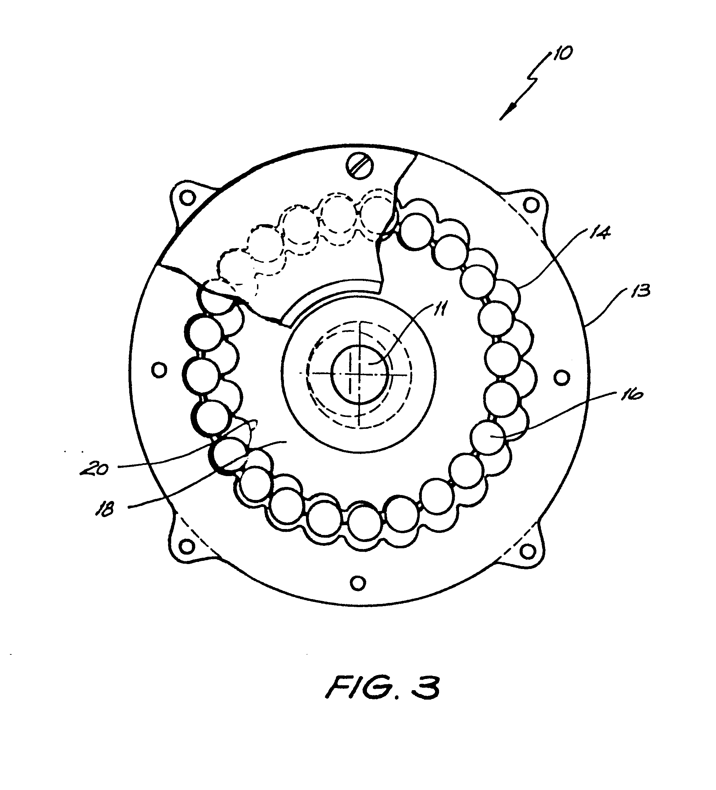

Fig. 3 is a schematic part sectioned end elevation of the gear train of Fig. 1;

Fig. 4 is a schematic enlarged portion of the gear train of Fig. 1;

Fig. 5 is a schematic exploded portion of an alternative construction of the gear train of Fig. 1;

Fig. 6 is a schematic sectioned side elevation of an axial flux induction electric motor provided with a gear train with a high reduction ratio;

RMV/276W

Fig. 7 is a schematic end elevation of a further planetary gear train;

Fig. 8 is a schematic perspective part exploded view of the gear train of Fig. 7; and

Fig. 9 is a schematic end elevation of the gear train of Fig. 7 provided with a flexible drive.

In the accompanying drawings there is schematically depicted a gear train 10 which will be described in its reduction mode of operation. The gear train 10 has an input shaft 11 having a rotational axis 12. The shaft 11 is supported by a casing 13 providing an internal ring gear 14. The shaft 12 is provided with a cylindrical support portion 15 which rotatably supports a planetary gear 16. The planetary gear 16 is rotatably supported by the portion 15 so as to be rotatable not only about the axis 12 but about an eccentric axis 17 spaced radially from the axis 12 but generally parallel thereto. Also mounted on the shaft 11 is a sun gear 18 providing an output shaft 19. The sun gear 18 has an external gear 20 meshingly engaged with an internal ring gear 21 provided by the planetary gear 16. The planetary gear 16 is also provided with an external gear 22 meshingly engaged with the ring gear 14.

In operation of the abovedescribed planetary gear 10, rotation of the shaft 11 causes rotation of the ring gear 16 about the two axes 12 and 17. This rotation then transfers motion to the sun gear 18. The sun gear 20 and shaft 19 are rotatably supported on an end portion 24 of the shaft 11.

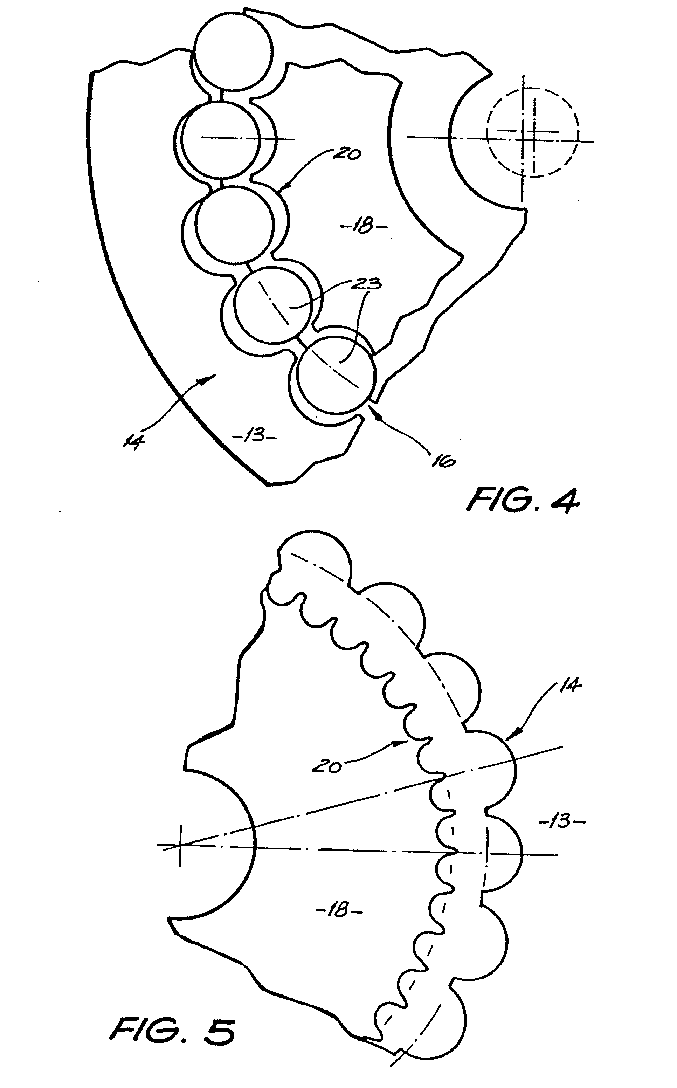

As best seen in Fig. 4, the teeth of the ring gear 14 define generally semi-circular recesses of the same configuration as the teeth of the sun gear 18. Accordingly the gears 20 and 22 cooperate to define generally cylindrical gear members 23.

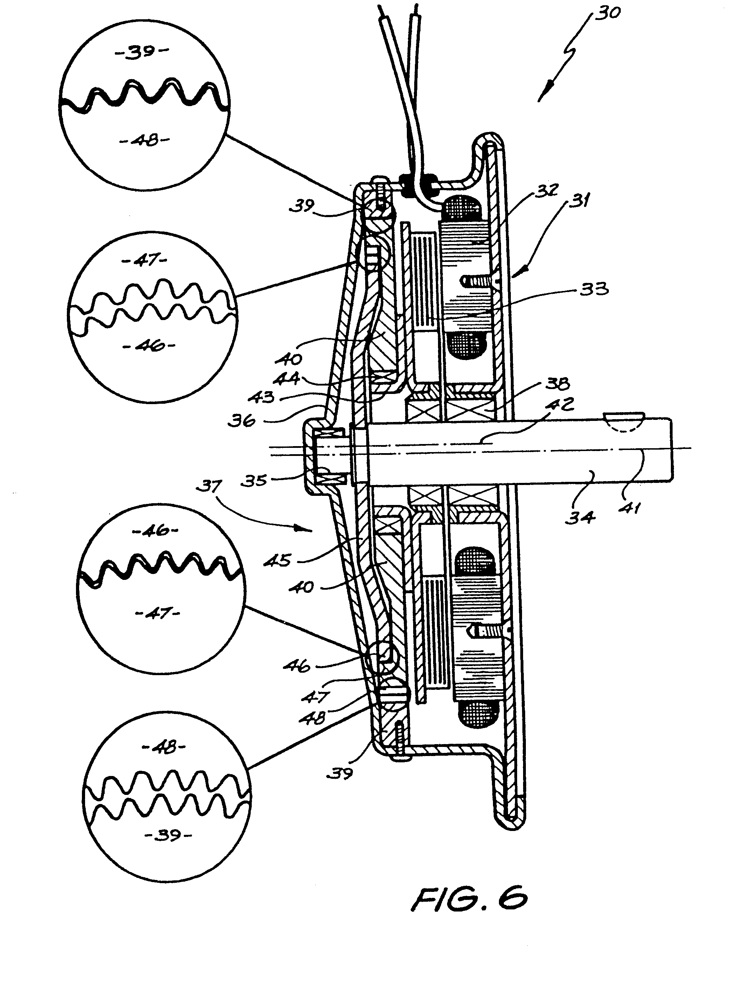

It should be appreciated that the reduction ratio can be altered by varying the diameters of the gears and the number of gear teeth on the various gears. As an example (Fig. 5) the number of teeth on the sun gear can be increased considerably relative to the number of teeth on the ring gear. The configuration of the teeth on the

RMV/276W

planetary gear would have to be rearranged in order to cooperate with the sun gear and ring gear.

In Figure 6 there is schematically depicted a "wiper" motor and gear assembly to be used for driving the windscreen wipers of a motor vehicle. The assembly 30 includes an axial flux induction electric motor 31 which may be constructed in accordance with the methods of manufacture described in U.S. Patents 4,320,645, 4,410,820 and 4,507,947. The motor 31 consists of a stator 32 and a rotor 33 rotatably supported by a shaft 34. The shaft 34 has one end rotatably supported by a bush 35 mounted in a housing 36 enclosing the motor 31 and a reduction gear train 37. Bearing supports 38 are also provided for the shaft 34.

The gear train 37 includes an internal ring gear 39 fixed to the housing 37. The shaft 34 rotatably supports a planetary gear 40, so that the gear 40 is rotatable not only about the axis 41 of the shaft 34, but also about an eccentric axis 42 defined by the mounting 43 and bearing 44 which mount the gear 40 eccentric relative to the axis 41. The axis 42, although being spaced from the axis 41, is parallel thereto. Fixed to the shaft 34 is a sun gear 45 from which power is transmitted to the shaft 34. The sun gear 45 has an external gear 46 meshingly engaged with an internal ring gear 47 provided on the planetary gear 40. The planetary gear 40 is also provided with an external gear 48 engaged with the ring gear 39.

In operation of the above described motor 31 and gear train 37, rotation of the rotor 33 causes rotation of the planetary gear 40 and accordingly the ring gear 47 about the two axes 41 and 42. This rotation then transfers motion to the sun gear 45.

As an example, the ring gear 39 could have 76 teeth, and the gear 48 with 75 teeth. The gear 47 could have 66 teeth and the gear 46, 65 teeth. However it should be appreciated that other teeth numbers are also applicable.

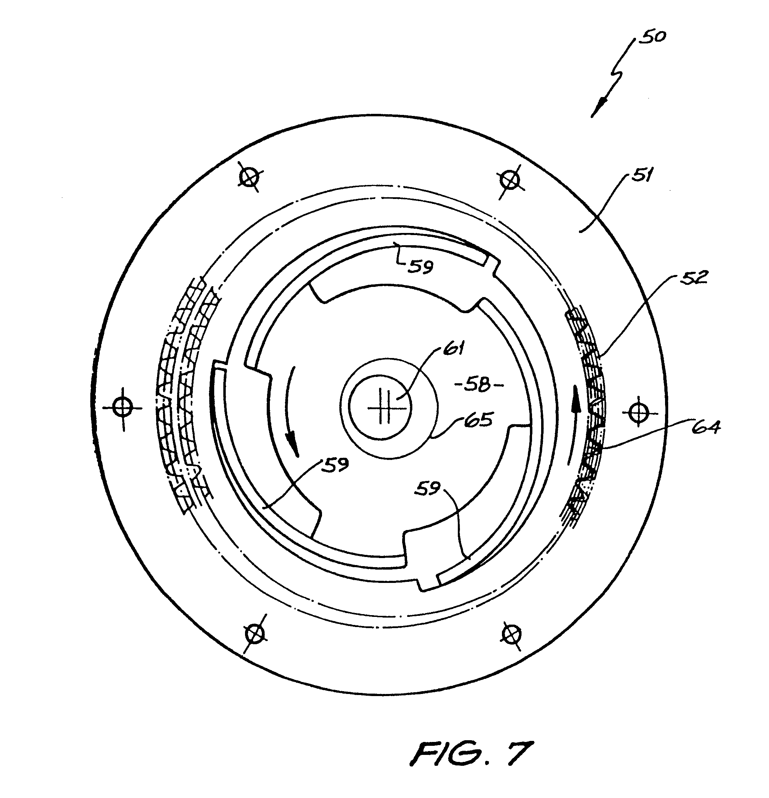

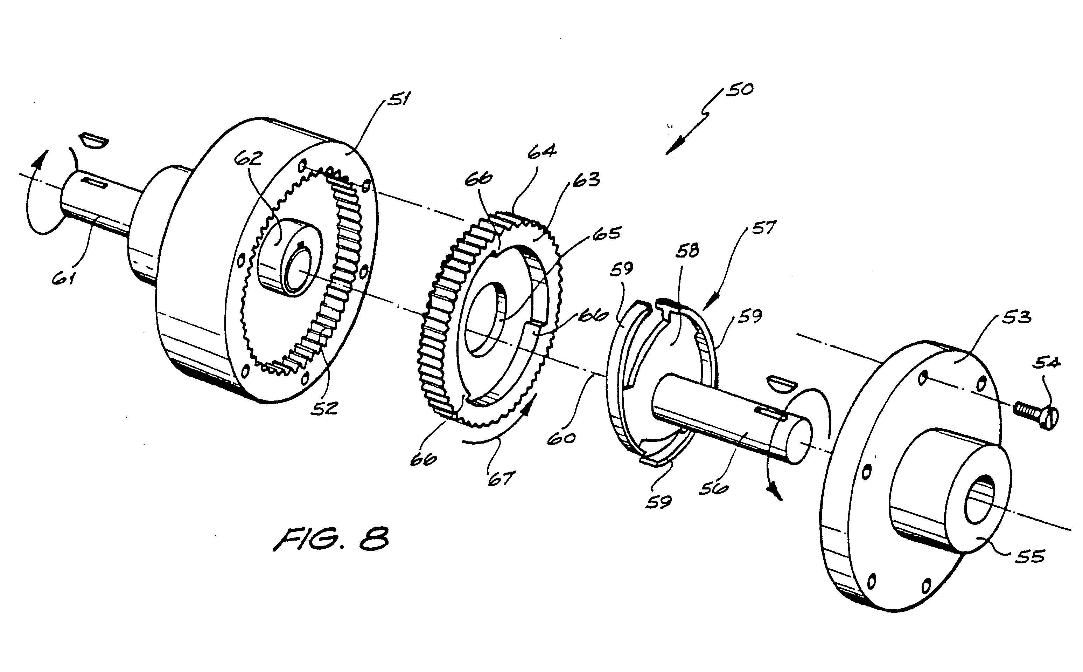

In Figs. 7 and 8 there is schematically depicted a planetary gear train 50 which will be described in its reduction mode of operation. The gear train 50 includes a casing 51 provided with an internal ring gear 52. The casing 51 has an end plate 53 secured to the casing 51 by means of threaded fasteners 54. The casing 51 supports a driven shaft 61 which is provided at its inner end with an eccentrically mounted cylindrical support 62. The support 62 has a longitudinal axis parallel to but radially displaced from the axis 60. Slidably rotatably supported by this support 62 is a planetary gear 63 having external teeth 64 which meshingly engage with the internal ring gear 52 formed in the casing 51. As the shaft 61 is rotated, the gear 63 is caused to rotate about the axis 60, as well as the axis of the support 62 on a similar manner to the previously described planetary gear train. The gear 63 has a central aperture 65 which is slidably supported on the support 62. The gear 63 is provided with a set of ratchet teeth 66 which engage pawls 59 forming part of the flexible drive 57 attached to the shaft 56. The flexible drive 57 includes a plate 58 to which the pawls 59 are attached. The pawls 59 are of "leaf" configuration and are resiliently deflectable towards the axis 60. Accordingly, when the gear 63 is driven in the direction of the arrow 67, rotary motion is transferred to the shaft 56 by the ratchet and pawl assembly consisting of the ratchet teeth 66 and pawls 59. The shaft 56 has its longitudinal axis on the axis 60 and is supported by a flange 55 forming part of the end plate 53.

The above discussed planetary gear train 50, enables rotary power to be transmitted in one direction only. It should be particularly noted that the resilient nature of the pawls 59 enables power to be continuously transmitted from the gear 63 as it oscillates about the axis 60.

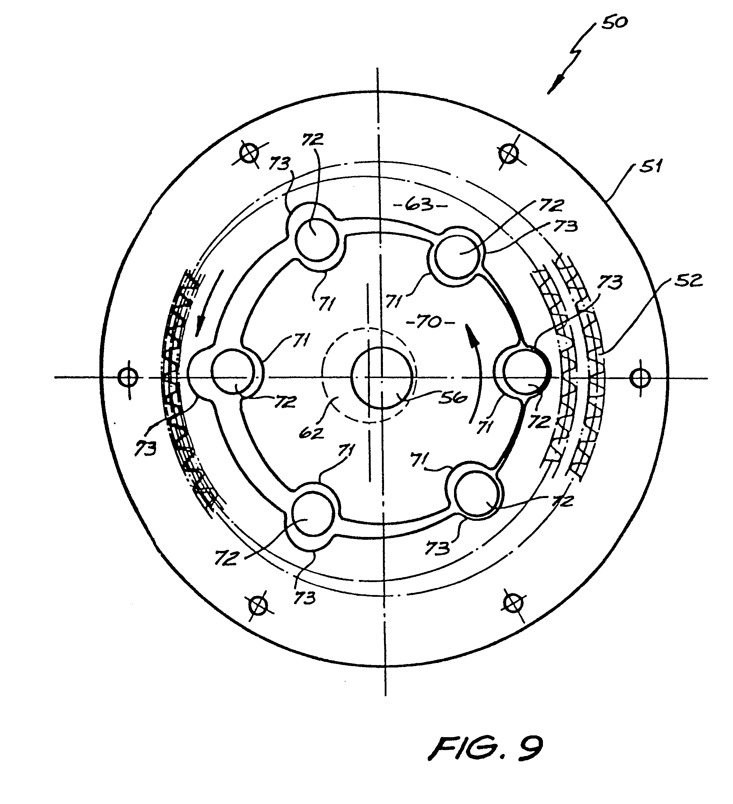

In Fig. 9 there is schematically depicted an alternative drive assembly for the planetary gear train 50. The items employed in the gear train of Figs. 7 and 8 and also employed in the gear train of Fig. 9, have been given the same identification numerals. However, the ratchet and pawl assembly has been replaced by a drive plate 70 having notches 71 which receive resilient elements 72. The resilient elements 72 are also received within recesses 73 formed in the planetary gear 63. The resilient elements 72 could be formed of a resilient plastics material or of rubber either of natural or synthetic construction. The resilient elements 72 enable rotary power tb be transmitted from the planetary gear 63 continuously to the shaft 66 by maintaining contact with the gear 63 despite its planetary movement.

RMV/276W

## CLAIMS

1. A gear train 10 comprising a shaft 11 having an axis of rotation, an internal ring gear 14 coaxial with respect to said shaft 11, a sun gear means 20 coaxial with respect to said shaft 11, a planetary gear 16 rotatably supported on said shaft 11 so as to be rotatable with respect thereto about an axis eccentric with respect to the rotational axis of said shaft 11, said planetary gear 16 having external gear teeth 22 meshingly engaged with said ring gear 14, and internal gear teeth means 21 meshingly engaged with said sun gear means 20, whereby rotary power is transferred between said shaft 11 and said sun gear means 20 upon rotation of said planetary gear 16 about its eccentric axis and the axis of said shaft 11.

2. The gear train 10 of claim 1 further including a hollow housing 13 within which said ring gear 14, sun gear means 20 and planetary gear 16 are enclosed, with said ring gear 14 being fixed to said housing 13 and said shaft 11 being rotatably supported by said housing 13.

3. The gear train 10 of claim 2 including a further shaft 19 fixed to said sun gear means 20 and being rotatably supported by said housing 13 and extending outwardly therefrom.

4. The gear train 10 of claim 3 wherein the first mentioned shaft 11 has an end portion 24 located within said further shaft 19 and said further shaft 19 is rotatably supported on said end portion 24.

5. A wiper drive assembly 30 comprising an axial flux induction electric motor 31 having a stator 32 and a rotor 33, a housing 36 to which said stator 32 is fixed, and a gear train 10 according to claim 1, with said planetary gear attached to said rotor 33 so as to be driven thereby.

6. The drive assembly of claim 5 wherein said shaft 11 extends through said stator 32 and rotor 33.

7. The planetary gear train 10 of claim 1 wherein said sun gear means 20 is a gear 20 having external teeth and said internal gear teeth means 21 is an internal gear 21 meshingly engaged with the gear teeth of said sun gear means 20.

8.     The gear train 10 of claim 1 wherein said sun gear means 20 and said internal gear teeth means 16 are a ratchet 66 and pawl 59 assembly 57 cooperating so that said gear train 10 will only transmit rotary power in one rotational direction.

9.     The gear train 10 of claim 1 wherein said sun gear means 20 and said internal gear teeth means 16 include cooperating recesses defining apertures within which resilient power transmitting elements 72 are located enabling rotary power to be transmitted between said sun gear means 20 and said shaft 11.

0211687

FIG. 1

0211687

FIG. 2

FIG. 3

FIG. 4

FIG. 5

FIG. 6

**FIG. 7**

FIG. 8

0211687

FIG. 9

## DOCUMENTS CONSIDERED TO BE RELEVANT

EP 86306404.4

| Category | Citation of document with indication, where appropriate, of relevant passages | Relevant to claim | CLASSIFICATION OF THE APPLICATION (Int. Cl.4) |
|---|---|---|---|
| A | GB - A - 1 290 169 (BENDIX) <br> * Totality * <br> -- | 1,2,3, 7,9 | F 16 H 1/28 |
| A | EP - A1 - 0 114 561 (EMERSON ELECTRIC) <br> * Totality * <br> -- | 4 | |
| P,A | EP - A1 - 0 152 838 (ADVANCED ENERGY) <br> * Totality * <br> -- | 4 | |
| A | DE - A - 1 750 279 (VEB ELEK-TRONISCHE) <br> * Totality * <br> -- | | |
| A | GB - A - 1 340 018 (BENDIX) <br> * Totality * <br> -- | | **TECHNICAL FIELDS SEARCHED (Int. Cl.4)** <br><br> F 16 H 1/00 |
| A | US - A - 3 068 719 (SINGELMANN) <br> * Totality * <br> -- | | F 16 H 7/00 |
| A | US - A - 3 783 712 (COLINET) <br> * Totality * <br> -- | | |
| A | US - A - 4 023 440 (KENNINGTON et al.) <br> * Totality * <br> -- | | |

The present search report has been drawn up for all claims

| Place of search | Date of completion of the search | Examiner |
|---|---|---|
| VIENNA | 07-11-1986 | SCHATEK |

European Patent
Office

**EUROPEAN SEARCH REPORT**

| | DOCUMENTS CONSIDERED TO BE RELEVANT | | EP 86306404.4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | US - A - 4 282 777 (RYFFEL et al.)<br><br>* Totality *<br><br>-- | | |

TECHNICAL FIELDS
SEARCHED (Int. Cl.4)

The present search report has been drawn up for all claims

| Place of search | Date of completion of the search | Examiner |
|---|---|---|
| VIENNA | 07-11-1986 | SCHATEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82